# EUROPEAN PATENT SPECIFICATION

(11) **EP 0 969 233 B1**
(45) Date of publication and mention of the grant of the patent: **04.01.2006**
(21) Application number: 99202124.6
(22) Date of filing: 30.06.1999
(51) Int. Cl.: F16K 17/30, G05D 7/01, F16K 17/34

(54) **Flow limiter**
Durchflussbegrenzer
Limiteur de débit

(30) Priority: 30.06.1998 NL 1009524; 18.03.1999 NL 1011596
(43) Date of publication of application: 05.01.2000
(73) Proprietor: Watts Industries Netherlands B.V., 6961 LZ Eerbeek (NL)
(72) Inventor: Aarntzen, Richardus Hendrikus Arnoldus, 6691 DT Gendt (NL)
(74) Representative: Bartelds, Erik

(56) References cited:
- EP-A- 0 161 348
- EP-A- 0 763 452
- WO-A-92/01184
- WO-A-94/16255
- DE-A- 2 439 287
- FR-A- 2 721 370
- US-A- 2 441 220
- US-A- 3 331 389
- US-A- 4 436 111
- US-A- 4 958 657
- US-A- 4 976 283
- US-A- 5 462 081

## Description

The invention relates to a device for limiting the flow rate of a liquid as defined in the preamble of claim 1. Flow limiting devices as flow limiters are known from e.g. DE-A-24 39 287 or US-A-4 976 283.

The prior art document DE-A-24 39 287 discloses a flow limiter having a tubular housing in which a conical flow limiting body is movable in axial direction. The flow limiting body is connected to an adjusting screw, by means of which it is moved to a desired position in the housing. The flow limiting body, which has a ribbed outer surface, is surrounded by one or more O-rings fixed in the housing. The ribbed outer surface of the flow limiting body and the O-ring(s) together define an annular gap through which water may flow, the size of the gap being adjusted by means of the screw.

In US-A-4 976 283 a flow limiter or regulator for water or other fluids is disclosed, which has a housing with an internal shoulder between its inlet and outlet. The shoulder faces the inlet and slidably supports an elastically deformable annular flow restrictor which cooperates with a centrally located stud to define an annular passage extending from the inlet to the shoulder and followed by an annular portion of the channel between a conically diverging stepped or roughened internal surface of the housing and a stepped or roughened conical external surfaces of a guide member which carries the stud. Deformation, and hence the flow restricting action, of the flow restrictor depends upon the pressure differential which is established by the conveyed fluid. The flow restrictor has a conical internal surface which tapers in a direction from the inlet of the channel toward the shoulder, and the radially outermost portion of the flow restrictor has axially parallel slots or holes which weaken the adjacent portion of the flow restrictor so that the latter is more readily deformable and can properly control the flow of fluid which is conveyed at a relatively low pressure.

These two known flow limiting devices have in common that their control elements - the body and O-ring(s) - consist at least partially of elastomer material. Such known structures have the drawback that their control characteristics are not manageable and, even in the case of careful and accurate production, different flow limiters can possess highly diverse characteristics.

From e.g. WO-A-92 01184 a safety cut-out for gas pipes is known which includes all features of the preamble of claim 1. This safety cut-out comprises a valve which can be pressed against a valve seat in a tubular housing. The valve takes the form of a plate valve movable in the axial direction of the tubular housing against the action of a spring. Here, the cross-sectional area of the valve plate is smaller than the clear cross-section of the housing and the plate is held at a distance from the inner wall of the tubular housing and in addition the gas inlet union is fitted on the side of the valve plate on the side away from the spring.

It is a first object of the invention to provide a flow limiter which combines a simple structure with characteristics which are predictable and manageable within narrow limits. This is achieved by a flow limiting device as defined in claim 1.

Because the control elements of the inventive flow limiter are form-retaining, its flow control characteristics are manageable, predictable and reproducible. Moreover, the flow limiting device of the invention combines a simple structure with a very effective operation, with the option of realizing the device with a very small length. The described meander form means that the direction of the flow undergoes a substantial change in direction as it passes respectively the mouth rim and the annular edge. A very effective destruction of energy can hereby be achieved.

It should also be appreciated that the meander form can take a multiple form. This can be realized by providing the first body with two or more parts with a general beaker shape, which parts are positioned mutually coaxially. The number of annular edges must correspond with the number of beakers.

In a preferred embodiment, the second body corresponds with the housing, thus reducing the number of separate parts.

A specific embodiment has the special feature that the first body defines together with a foremost peripheral edge of the housing an at least more or less flat, annular inlet opening. A great effectiveness of the device can hereby be combined with a relatively small overall depth.

According to another aspect of the invention the device has the special feature that a plate disposed fixedly relative to the housing is situated upstream of the first body. This plate acts in a certain sense to screen the first body against abrupt pressure variations, thus ensuring a more even closing behaviour of the device.

This latter embodiment can have the special feature that the plate defines together with a foremost peripheral edge of the housing an at least more or less flat, annular inlet opening. In this case also a device is realized combining a high degree of effectiveness with a small overall depth.

The spring means can for instance be embodied as at least one usual helical spring. However, a better management and reproducibility is realized with an embodiment wherein the spring means comprise leaf spring means. In a practical embodiment this latter variant has the feature that the leaf spring means are monolithic and comprise a ring connected to the housing and comprising a number of lips supporting the first body. The lips in question can for instance extend substantially radially. In order to realize other spring characteristics the lips can also take other forms, for instance generally spiral shapes and can further have a width varying along their length.

In respect of a good management of the spring characteristic, an embodiment is recommended wherein the leaf spring means consist substantially of stainless steel or spring steel.

The leaf spring means can for instance be manufactured by punching from sheet material. Punching has the drawback however that the dimensional accuracy can leave something to be desired and that sharp edges can result which may affect the characteristics of the device. In this respect an embodiment is recommended wherein the leaf spring means are manufactured by etching or laser-cutting.

The spring means can be manufactured from any suitable material, for instance spring steel or an appropriate plastic. According to a specific aspect of the invention the device has the feature that the spring means contain memory metal. Such an embodiment is particularly suitable for heat-exchanging installations. A multi-stage control path can be realized with such an embodiment. Energy losses can be limited herewith in heating systems. Such energy losses are often designated initial losses, starting and stopping losses.

In a practical embodiment the device has the feature that the first body is supported by a stem which is slidable in a bush connected by one or more spokes to the second body or to the housing.

In order to obtain a more readily manageable characteristic and to influence the characteristic such that at low pressure the devices allow a greater flow, a preferred embodiment has the special feature that the first body has at least one continuous hole. Due to the presence of the continuous hole some of.the effective force is removed from the first body.

In the case where use is made of one continuous hole, this is preferably arranged centrally. In the case a plurality of continuous holes is applied, these holes are mutually ordered such that the first body is substantially loaded only by a force acting in axial direction without there being any danger of tilting. A number of holes disposed in the shape of a ring can for instance be placed in angularly equidistant manner.

In order to achieve that even under extreme conditions there is no danger of the first body completely closing the device, in a specific embodiment the device can have the special feature that the first body has on its downstream end edge a number of protrusions between which liquid can flow, also in the relevant extreme end position.

Finally, yet another specific embodiment has the special feature that the housing, the first body and the second body each consist of a form-retaining material, for instance metal such as aluminium, steel, stainless steel, or a hard plastic such as ABS, PPA, PA, POM, PP or the like. Combinations can also be applied.

Another specific embodiment has the special feature that the first body has a shape narrowing toward the inlet opening, for instance a generally conical, spherical, parabolic or hyperbolic shape. The upstream surface or front surface of the first body can optionally also have a flat shape. A rotation-symmetrical, narrowing form can have the advantage of a more regular and better manageable symmetrical loading of the first body by the liquid flow, which can enhance management of the control characteristic.

The invention will now be elucidated with reference to the annexed drawings. Herein:
- figure 1 is a schematic longitudinal section through a first embodiment of the inventive flow limiting device;
- figure 2 shows a longitudinal section corresponding with figure 7 through a variant;
- figures 3 and 4 show respective corresponding longitudinal sections through an embodiment as according to figure 8 in the situation with flow rate zero and a flow rate varying from zero; and
- figure 5 is a partly broken-away perspective view of the device in the situation of figure 3.

It is noted that all embodiments of the flow limiter according to the invention to be described hereinafter have one important aspect in common, i.e. that in contrast to the prior art use is made of a control element which is not based on the use of elastomers but on form-stiff elements and spring means of manageable type.

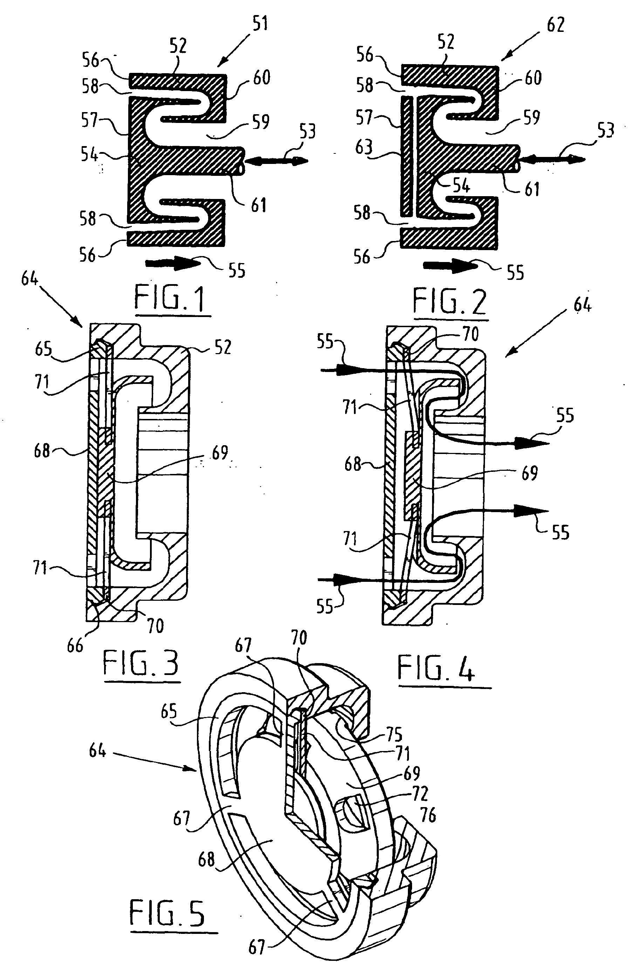

Figure 1 shows schematically in longitudinal section a flow limiter 51 with a generally tubular, rotation-symmetrical housing 52 and a first substantially rotation-symmetrical body 54 movable axially as according to arrow 53. The flow direction is indicated with an arrow 55.

The first body 54 is urged in the upstream direction, i.e. towards an inlet opening 58 by means of a spring (not shown here). A stable rest position is defined by the released position of the spring. As the infeed pressure of the flow increases, the first body 54 is pressed to the right against the spring force, where it tends to form an increasing obstacle and resistance to the flow.

The forward edge 56 bounds with front surface 57 of first body 54 the inlet opening 58, which is substantially flat and annular. An outlet opening 59 is bounded by a rear surface 60 of the housing and a stem 61 of first body 54. This stem 61 is guided slidably in a bushing (not shown) supported in the housing 52. In this embodiment the ratio of the surface areas of outlet opening 59 and inlet opening 58 is 100%.

During operation of flow limiter 1 not only is the clear passage space changed, but a strong, multiple and repeated deflection of the flow also takes place in the described manner, which results in an effective and uniform pressure destruction. This structure comprising multiple disruptions of the flow in combination with the reduction in size of the effective passage results in substantially less cavitation than in the known art and thereby also in less noise production and mechanical vibrations, wherein it is noted that in the known products the whole pressure drop normally takes place in a very short and single-stage path.

A number of fields of application of this embodiment and the embodiments to be discussed below are drinking water, sanitary fittings, heating, solar energy systems and so on.

Figure 2 shows a device 62 wherein a plate 63 placed fixedly relative to housing 52 is situated upstream of front surface 57 of first body 54. This plate serves as effective screening of first body 54 against abrupt pressure variations. This reduces the danger of sudden abrupt closure of the device in the case of pressure pulse.

In figure 1 and figure 2 the reset spring means are not drawn for the sake of clarity. It should be noted though, that these spring means can - in determined conditions - advantageously be manufactured from memory metal. In this case a two-step control for heat-exchanging installations, for instance heating devices, solar energy systems and the like, can be avoided. The invention can hereby make an additional contribution towards realization of the wish to manufacture an increasing number of energy-saving products.

Figures 3, 4 and 5 show a device 64 in detail. This device corresponds functionally with a device 62 according to figure 2.

Via three spokes 67 the housing bears a plate 68 via a ring 65 connected to the housing by means of a snap connection 66, which plate is placed upstream relative to a second body 69.

Clamped fixedly between ring 65 and the housing is a spring steel ring 70 which bears first body 69 in spring-loaded manner via three radial spokes 71 acting as leaf springs.

As shown particularly clearly in figure 5, first body 69 has three continuous holes 72 which are disposed in the shape of a ring at the same radial positions at mutual angular distances of 120°.

Attention is drawn to the fact that for reasons of flow technique the radial leaf springs 71 are preferably situated behind spokes 67 in the manner shown in figure 11.

The embodiments of figures 1 to 5 have a significant aspect in common, i.e. the meander form of the flow of the admitted medium, as indicated with arrows 55 in figure 1. Essential for this purpose are the shown complementary form of the beaker-like part of first body 69 on the one side and the shown, upstream-directed annular inner edge of the second body, in this case corresponding with housing 52, on the other.

Attention is finally drawn to the protrusions 75 on the rear edge 76 of first body 69, as shown in figure 4. These protrusions have the purpose of ensuring, when a very great pressure force is exerted on body 69, that a certain passage is always maintained, whereby the flow rate can never be reduced to zero.

It will be apparent on the basis of the above description that, in contrast to many functionally related devices according to the prior art, the flow limiters according to the invention do not make use of flexible and more or less deformable parts, usually based on the application of thermoplastic or other elastomers. By forgoing such materials, parameters which are poorly manageable in practice, such as elasticity, tolerances and permanent deformations of flexible control bodies, are avoided. The invention is hereby able to ensure a very predictable control characteristic which can be managed and reproduced within narrow limits with very low production wastage during mass production. As examples of the prior art are mentioned DE-A-33 02 759, EP-A-0 115 342, DE-A-38 23 368, DE-A-20 60 751, EP-A-0 350 721 and DE-A-26 16 566. These references illustrate the prior art, according to which the pressure destruction takes place in a very short path, which results in considerable cavitation, strong swirling and mechanical vibrations.

The invention generally provides a flow limiter which in different embodiments offers different significant aspects:
1. The control characteristic satisfies a prescribed norm within very narrow limits and is very predictable and reproducible, resulting in no OR negligible product wastage during mass production.
2. Noise production is very low.
3. There is no or negligible danger of cavitation which can adversely affect the lifespan of the products themselves.
4. Production costs are low.
5. There is the option of combining the flow limiting function with the function of non-return valve.

## Claims

1. Device (51;62;64) for limiting the flow rate of a liquid, which device (51;62;64) comprises:
- a generally tubular, rotation-symmetrical housing (52) with an inlet opening (58) and an outlet opening (59) for the liquid;
- a first substantially rotation-symmetrical body (54;69) which is guided for axial displacement and urged toward the inlet opening (58) by spring means (70,71) and which is located with the periphery of its widest part at a distance from the inner wall of the housing (52);
- a generally annular second body disposed in stationary position on the inner wall of the housing (52);
- wherein as the liquid flow (55) increases the first body (54;69) moves toward the second body to reduce the size of the passage in the gap defined by the first body (54 ; 69) and the second body;
**characterized in that** the housing (52), the first body (54;69) and the second body are form-retaining,
and **in that** the first body (54;69) comprises a part with a general beaker shape with a mouth rim directed toward the downstream side of the device (51;62;64), which mouth rim is situated in an annular space defined by the second body and comprising an annular edge directed in the upstream direction of the device (51;62;64) such that the flow (55) in the zone of the mouth rim and the annular edge displays the general form of a meander.

2. Flow limiting device (51;62;64) as claimed in claim 1, **characterized in that** the second body corresponds with the housing (52).

3. Flow limiting device (51;62;64) as claimed in claim 1 or 2, **characterized in that** the inlet opening (58) is defined by the first body (54;62)together with a foremost peripheral edge of the housing (52) and is at least more or less flat and annular.

4. Flow limiting device (62;64) as claimed in any of the preceding claims, **characterized in that** a plate (63;68) disposed fixedly relative to the housing (52) is situated upstream of the first body (54;69).

5. Flow limiting device (62;64) as claimed in claim 4, **characterized in that** the inlet opening (58) is defined by the plate (63;68) together with a foremost peripheral edge of the housing (54) and is at least more or less flat and annular.

6. Flow limiting device (64) as claimed in any of the preceding claims, **characterized in that** the spring means (70,71) comprise leaf spring means.

7. Flow limiting device (64) as claimed in claim 6, **characterized in that** the leaf spring means (70,71) are monolithic and comprise a ring (70) connected to the housing (52) and comprising a number of spokes (71) supporting the first body (69).

8. Flow limiting device (64) as claimed in claim 6 or 7, **characterized in that** the leaf spring means (70,71) consist substantially of stainless steel or spring steel.

9. Flow limiting device (64) as claimed in any of claims 6 to 8, **characterized in that** the leaf spring means (70,71) are manufactured by etching or laser-cutting.

10. Flow limiting device (51;62;64) as claimed in any of claims 1 to 7, **characterized in that** the spring means contain memory metal.

11. Flow limiting device (51;62) as claimed in any of claims 1 to 7 or 10, **characterized in that** the first body (54) is supported by a stem (61) which is slidable in a bush connected by one or more spokes to the second body or to the housing (52).

12. Flow limiting device (51;62;64) as claimed in any of the preceding claims, **characterized in that** the first body (69) has at least one continuous hole (72).

13. Flow limiting device (51;62;64) as claimed in any of the preceding claims, **characterized in that**, the first body (69) has on its downstream end edge (76) a number of protrusions (75) between which liquid can flow, also in the relevant extreme end position.

14. Flow limiting device (61;62) as claimed in any of the preceding claims, **characterized in that** the first body (54,69) has a shape narrowing toward the inlet opening (58), for instance a generally conical, spherical, parabolic or hyperbolic shape.

15. Flow limiting device (51;62;64) as claimed in any of the preceding claims, **characterized in that** the housing (52), the first body (54;69) and the second body each consist of a form-retaining material, for instance metal such as aluminium, steel, stainless steel, or a hard plastic such as ABS, PPA, PA, POM, PP or the like.

## Patentansprüche

1. Vorrichtung (51,62,64) zur Durchflussbegrenzung einer Flüssigkeit, wobei die Vorrichtung (51,62,64) umfasst:
- ein allgemein röhrenförmiges, rotationssymmetrisches Gehäuse (52) mit einer Einlassöffnung (58) und einer Auslassöffnung (59) für die Flüssigkeit,
- einen ersten, im wesentlichen rotationssymmetrischen Körper (54, 69), der zur axialen Verdrängung geführt und gegen die Einlassöffnung (58) durch Federmittel (70, 71) vorgespannt ist und der mit dem Umfang seines breitesten Teils in einem Abstand zu der Innenwand des Gehäuses (52) angeordnet ist,
- einen allgemein ringförmigen zweiten Körper, der in stationärer Position an der Innenwand des Gehäuses (52) angeordnet ist,
- wobei, wenn der Flüssigkeitsstrom (55) anwächst, der erste Körper (54,69) sich zu dem zweiten Körper bewegt, um die Größe des Durchlasses in dem durch den ersten Körper (54, 69) und den zweiten Körper bestimmten Spalt zu reduzieren,
**dadurch gekennzeichnet,**
**dass** das Gehäuse (52), der erste Körper (54, 69) und der zweite Körper formbeständig sind,
und **dass** der erste Körper (54, 69) ein Teil mit einer allgemeinen Becherform mit einem Öffnungsrand zur Stromabwärtsseite der Vorrichtung (51, 62, 64) gerichtet aufweist, deren Öffnungsrand in einem durch den zweiten Körper definierten Ringraum angeordnet ist, und dieser eine zur Stromaufwärtsseite der Vorrichtung (51,62,64) gerichtete Ringkante so aufweist, dass die Strömung (55) im Bereich des Öffnungsrandes und der Ringkante die allgemeine Form eines Meanders zeigt.

2. Vorrichtung (51,62,64) zur Durchflussbegrenzung nach Anspruch 1,
**dadurch gekennzeichnet,**
**dass** der zweite Körper das Gehäuse (52) ist.

3. Vorrichtung (51,62,64) zur Durchflussbegrenzung nach Anspruch 1 oder 2,
**dadurch gekennzeichnet,**
**dass** die Einlassöffnung (58) durch den ersten Körper (54, 62) mit einer zuvordersten Außenkante des Gehäuses (52) bestimmt wird und zumindest mehr oder weniger flach und ringförmig ist.

4. Vorrichtung (62,64) zur Durchflussbegrenzung nach einem der vorhergehenden Ansprüche,
**dadurch gekennzeichnet,**
**dass** eine Platte (63,68), die fest im Verhältnis zum Gehäuse (52) angeordnet ist, stromaufwärts zu dem ersten Körper (54,69) liegt.

5. Vorrichtung (62,64) zur Durchflussbegrenzung nach Anspruch 4,
**dadurch gekennzeichnet,**
**dass** die Einlassöffnung (58) durch die Platte (63,68) zusammen mit einer zuvordersten Außenkannte des Gehäuses (54) bestimmt wird und zumindest mehr oder weniger flach und ringförmig ist.

6. Vorrichtung (64) zur Durchflussbegrenzung nach einem der vorhergehenden Ansprüche,
**dadurch gekennzeichnet,**
**dass** die Federmittel (70,71) Blattfedermittel aufweisen.

7. Vorrichtung (64) zur Durchflussbegrenzung nach Anspruch 6,
**dadurch gekennzeichnet,**
**dass** die Blattfedermittel (70,71) einstückig sind und einen Ring (70), der mit dem Gehäuse (52) verbunden ist, und eine Anzahl an Speichen (71) aufweisen, die den ersten Körper (69) halten.

8. Vorrichtung (64) zur Durchflussbegrenzung nach Anspruch 6 oder 7,
**dadurch gekennzeichnet,**
**dass** die Blattfedermittel (70,71) im wesentlichen aus Edelstahl oder Federstahl bestehen.

9. Vorrichtung (64) zur Durchflussbegrenzung nach einem der Ansprüche 6 bis 8,
**dadurch gekennzeichnet,**
**dass** die Blattfedermittel (70,71) durch Ätzen oder Laserschneiden hergestellt sind.

10. Vorrichtung (51,62,64) zur Durchflussbegrenzung nach einem der Ansprüche 1 bis 7,
**dadurch gekennzeichnet,**
**dass** die Federmittel Formgedächtnismetall enthalten.

11. Vorrichtung (51,62) zur Durchflussbegrenzung nach einem der Ansprüche 1 bis 7 oder 10,
**dadurch gekennzeichnet,**
**dass** der erste Körper (54) von einem Schaft (61) gehalten wird, der in einer Hülse verschiebbar ist, die durch eine oder mehrere Speichen mit dem zweiten Körper oder dem Gehäuse (52) verbunden ist.

12. Vorrichtung (51,62,64) zur Durchflussbegrenzung nach einem der vorhergehenden Ansprüche,
**dadurch gekennzeichnet,**
**dass** der erste Körper (69) zumindest eine durchgängige Öffnung (72) hat.

13. Vorrichtung (51,62,64) zur Durchflussbegrenzung nach einem der vorhergehenden Ansprüche,
**dadurch gekennzeichnet,**
**dass** der erste Körper (69) an seiner stromabwärtigen Endkante (76) eine Anzahl von Vorsprüngen (75) hat, zwischen denen Flüssigkeit auch in der entsprechenden äußersten Endstellung strömen kann.

14. Vorrichtung (61,64) zur Durchflussbegrenzung nach einem der vorhergehenden Ansprüche,
**dadurch gekennzeichnet,**
**dass** der erste Körper (54,69) eine Form hat, die sich zu der Einlassöffnung (58) verengt, beispielsweise eine allgemein kegelförmige, kugelförmige, parabolische oder hyperbolische Form.

15. Vorrichtung (51,62,64) zur Durchflussbegrenzung nach einem der vorhergehenden Ansprüche,
**dadurch gekennzeichnet,**
**dass** das Gehäuse (52), der erste Körper (54, 69) und der zweite Körper jeweils aus einem formbeständigen Material bestehen, beispielsweise Aluminium, Stahl, Edelstahl, oder einem Hartplastik wie etwa ABS, PPA, PA, POM, PP oder ähnlichem.

## Revendications

1. Dispositif (51 ; 62 ; 64) destiné à limiter le débit d'un liquide, lequel dispositif (51 ; 62 ; 64) comprend :
un boîtier (52) de forme générale tubulaire et à symétrie de révolution qui est doté d'une ouverture d'admission (58) et d'une ouverture de sortie (59) destinées au liquide ;
- un premier corps (54 ; 69) sensiblement à symétrie de révolution qui est guidé pour le déplacement axial et sollicité en direction de l'ouverture d'admission (58) par des moyens élastiques (70, 71) et qui est placé de telle sorte que la périphérie de sa partie la plus large se trouve à une distance de la paroi intérieure du boîtier (52) ;
- un deuxième corps de forme générale annulaire placé en position immobile sur la paroi intérieure du boîtier (52) ;
- le premier corps (54 ; 69) se déplaçant en direction du deuxième corps, lorsque le débit de liquide (55) augmente, afin de réduire la dimension du passage dans l'espace défini par le premier corps (54 ; 69) et le deuxième corps ;
**caractérisé en ce que** le boîtier (52), le premier corps (S4 ; 69) et le deuxième corps sont à conservation de forme, et
**en ce que** le premier corps (54 ; 69) comprend une partie en forme générale de coupe présentant un rebord d'embouchure dirigé vers l'aval du dispositif (51 ; 62 ; 64), lequel rebord d'embouchure est situé dans un espace annulaire défini par le deuxième corps et comprenant un bord annulaire dirigé vers l'amont du dispositif (51 ; 62 ; 64) de sorte que le débit (55) dans la zone du rebord d'embouchure et du bord annulaire a la forme générale d'un méandre.

2. Dispositif de limitation de débit (51 ; 62 ; 64) selon la revendication 1, **caractérisé en ce que** le deuxième corps correspond au boîtier (52).

3. Dispositif de limitation de débit (51 ; 62 ; 64) selon la revendication 1 ou 2, **caractérisé en ce que** l'ouverture d'admission (58) est définie par le premier corps (54 ; 62) conjointement avec un bord périphérique avant du boîtier (52) et est au moins plus ou moins plate et annulaire.

4. Dispositif de limitation de débit (62 ; 64) selon l'une quelconque des revendications précédentes, **caractérisé en ce qu'**une plaque (63 ; 68) placée fixe par rapport au boîtier (52) est située en amont du premier corps (54 ; 69).

5. Dispositif de limitation de débit (62 ; 64) selon la revendication 4, **caractérisé en ce que** l'ouverture d'admission (58) est définie par la plaque (63 ; 68) conjointement avec un bord périphérique avant du boîtier (54) et est au moins plus ou moins plat et annulaire.

6. Dispositif de limitation de débit (64) selon l'une quelconque des revendications précédentes, **caractérisé en ce que** les moyens élastiques (70, 71) comprennent des moyens élastiques à lames.

7. Dispositif de limitation de débit (64) selon la revendication 6, **caractérisé en ce que** les moyens élastiques à lames (70, 71) sont monoblocs et comprennent une bague (70) reliée au boîtier (52) et comprenant un certain nombre de rayons (71) supportant le premier corps (69).

8. Dispositif de limitation de débit (64) selon la revendication 6 ou 7, **caractérisé en ce que** les moyens élastiques à lames (70,71) sont sensiblement en acier inoxydable ou en acier à ressort.

9. Dispositif de limitation de débit (64) selon l'une quelconque des revendications 6 à 8, **caractérisé en ce que** les moyens élastiques à lames (70, 71) sont fabriqués par attaque chimique ou par découpage au laser.

10. Dispositif de limitation de débit (51 ; 62 ; 64) selon l'une quelconque des revendications 1 à 7, **caractérisé en ce que** les moyens élastiques contiennent un métal à mémoire.

11. Dispositif de limitation de débit (51 ; 62) selon l'une quelconque des revendications 1 à 7 ou 10, **caractérisé en ce que** le premier corps (54) est supporté par une tige (61) qui est apte à coulisser dans une douille reliée à un ou plusieurs rayons du deuxième corps ou au boîtier (52).

12. Dispositif de limitation de débit (51; 62 ; 64) selon l'une quelconque des revendications précédentes, **caractérisé en ce que** le premier corps (69) comporte au moins un trou continu (72).

13. Dispositif de limitation de débit (51 ; 62 ; 64) selon l'une quelconque des revendications précédentes, **caractérisées en ce que** le premier corps (69) comporte sur son bord d'extrémité aval (76) un certain nombre de saillies (75) entre lesquelles le liquide peut s'écouler, également dans la position d'extrémité extrême pertinente.

14. Dispositif de limitation de débit (61 ; 62) selon l'une quelconque des revendications précédentes, **caractérisé en ce que** le premier corps (54, 69) a une forme s'amincissant en direction de l'ouverture d'admission (58) par exemple une forme générale conique, sphérique, parabolique ou hyperbolique.

15. Dispositif de limitation de débit (51 ; 62 ; 64) selon l'une quelconque des revendications précédentes, **caractérisé en ce que** le boîtier (52), le premier corps (54 ; 69) et le deuxième corps sont chacun en un matériau à conservation de forme, par exemple un métal tel que l'aluminium, l'acier, l'acier inoxydable, ou une matière plastique dure telle que ABS, PPA, PA, POM, PP ou analogue.
